# FASCICULE DE BREVET EUROPEEN

(11) **EP 2 644 016 B1**
(45) Date de publication et mention de la délivrance du brevet: **13.05.2015**
(21) Numéro de dépôt: 13160843.2
(22) Date de dépôt: 25.03.2013
(51) Int. Cl.: A01C 5/06, A01B 23/02

(54) **Dispositif de nivellement et machine agricole avec un tel dispositif**
Nivelliervorrichtung und Landwirtschaftliche Maschine mit einer solchen Vorrichtung
Levelling device and agricultural implement with such a device

(30) Priorité: 26.03.2012 FR 1252686
(43) Date de publication de la demande: 02.10.2013
(73) Titulaire: KUHN S.A., 67700 Saverne (FR)
(72) Inventeur: Chalancon, Jean-Marie, 67700 SAVERNE (FR); Potier, Philippe, 67290 ZITTERSHEIM (FR)
(74) Mandataire: Esch, Esther Evelyne

(56) Documents cités:
- EP-A1- 0 344 647
- DE-U1- 8 901 351
- US-A- 5 027 907

## Description

La présente invention se rapporte au domaine technique général des machines agricoles destinées aux opérations de travail du sol et/ou de semis. L'invention concerne notamment un dispositif de nivellement pour machine de travail du sol et/ou de semis avec au moins un organe égalisateur présentant un élément racleur et une partie de fixation souple, l'élément racleur étant monté sur ladite partie de fixation par l'intermédiaire d'un boulon.

Les semoirs sont équipés généralement d'un dispositif de nivellement à l'arrière de la barre de semis pour égaliser les sillons tracés dans le sol par les organes de mise en terre et pour obtenir un bon recouvrement des semences. Un tel dispositif de nivellement présente des organes égalisateurs qui nivellent la surface du champ. Les organes égalisateurs réalisés, d'une seule pièce, sont en acier à ressort rond. Ces organes égalisateurs sont cintrés et sont agencés de manière à ce que leur piste de travail se chevauche. Comme ces organes égalisateurs sont amenés à gratter le sol, la partie cintrée qui s'étend sensiblement parallèlement au sol subit une usure importante. Pour conserver un recouvrement efficace des semences et obtenir une levée uniforme, les organes égalisateurs doivent alors être échangés par des organes égalisateurs neufs. Cette opération a un coût non négligeable.

Afin de réduire ce coût, il est connu d'utiliser des organes égalisateurs qui sont réalisés en deux parties. Ainsi, seule la partie en contact avec le sol est échangée alors que la partie de fixation originale est conservée. De tels organes égalisateurs pour un semoir sont présentés dans le document DE 89 01 351 U. L'organe égalisateur présente un élément racleur destiné à être en contact avec le sol qui est monté sur une partie de fixation souple. La partie de fixation souple autorise à l'élément racleur de se dégager vers le haut pour passer un obstacle. Il s'agit d'une lame ressort. L'élément racleur est monté sur la lame ressort au moyen de deux boulons. L'extrémité de l'élément racleur est conformée en U et est destinée à recevoir les boulons. Pour avoir un nivellement intégral et uniforme, les pistes de travail des éléments racleurs voisins doivent se chevaucher. L'orientation de l'élément racleur par rapport à sa partie de fixation est tributaire de la précision de la conformation en U de son extrémité. La longueur des éléments racleurs doit donc être augmentée pour que le chevauchement existe.

La présente invention a pour but de remédier aux inconvénients de l'état de la technique. Elle doit notamment proposer un dispositif de nivellement pour égaliser le sol uniformément dont le montage et le positionnement des éléments racleurs sont plus facile à mettre en oeuvre.

A cet effet, une importante caractéristique de l'invention consiste en ce que l'élément racleur présente, au voisinage de son extrémité supérieure, un perçage destiné à recevoir ledit boulon et au moins un bossage disposé au-dessus dudit perçage et venant en regard de ladite partie de fixation. De cette manière, le montage d'un élément racleur sur une partie de fixation correspondante est plus rapide et facile. Le montage est réalisé par un seul boulon. Le perçage donne le positionnement en hauteur de l'élément racleur sur la partie de fixation et le bossage permet de figer son orientation par rapport à la partie de fixation.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** est une vue semi-éclatée du dispositif de nivellement selon l'invention,
- la **figure 2** est une vue avant du dispositif de nivellement,
- la **figure 3** est une vue en coupe suivant la ligne III-III de la figure 2,
- la **figure 4** représente une vue en perspective d'un dispositif de nivellement selon un premier exemple de réalisation,
- la **figure 5** représente une vue en perspective d'un dispositif de nivellement selon un autre exemple de réalisation.

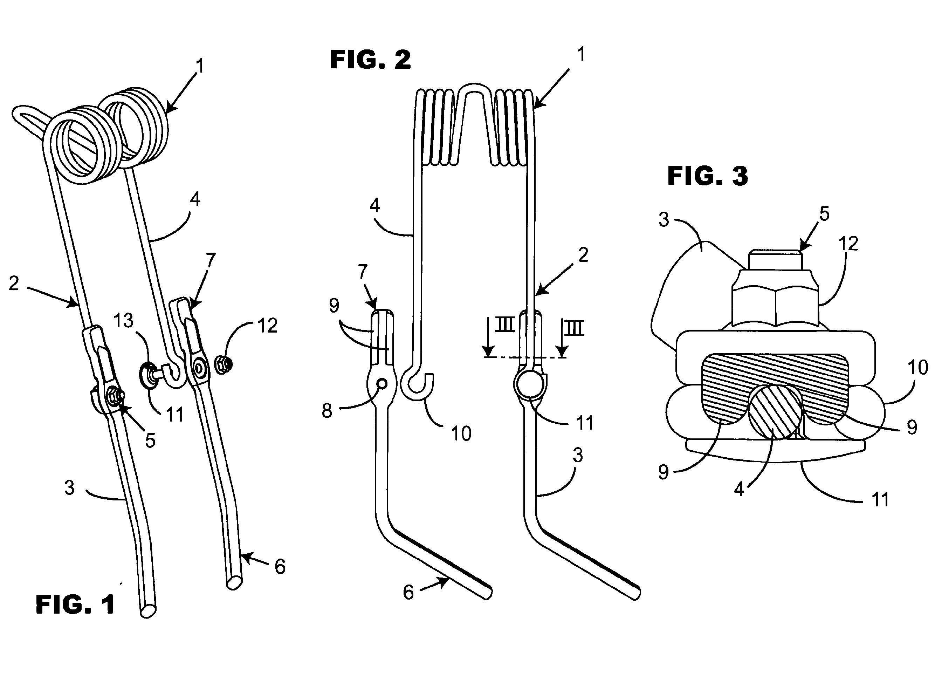

Un dispositif de nivellement (1), tel que représenté sur la figure 1, peut être attelé à l'arrière d'une machine agricole et notamment une machine de travail du sol et /ou de semis. Le dispositif de nivellement (1) présente au moins un organe égalisateur (2) qui égalise la couche supérieure du terrain. Chaque organe égalisateur (2) présente au moins un élément racleur (3) et au moins une partie de fixation (4). Au moins une partie de l'élément racleur (3) s'étend dans le prolongement de la partie de fixation (4). L'élément racleur (3) est monté sur la partie de fixation (4) par l'intermédiaire d'un boulon (5). Le boulon (5) est destiné à assurer un assemblage par serrage. L'élément racleur (3) s'étend en position de travail, au moins approximativement, parallèlement à la surface du terrain. La partie de fixation (4) est souple. Elle présente un système élastique sous forme d'un enroulement de ressort permettant à l'élément racleur (3), monté sur la partie de fixation (4) correspondant, de se dégager vers le haut pour franchir une pierre ou un obstacle. Grâce au système élastique, l'élément racleur (3) reprend sa position initiale après avoir passé l'obstacle.

Selon une caractéristique importante de l'invention, l'élément racleur (3) présente, au voisinage de son extrémité supérieure (7), un perçage (8) destiné à recevoir ledit boulon (5) et au moins un bossage (9) venant en regard de ladite partie de fixation (4). Grâce au perçage (8) et au bossage (9), le montage d'un élément racleur (3) sur une partie de fixation (4) correspondante est plus rapide et facile. Avec une fixation de l'élément racleur (3) par un seul boulon, les temps de démontage et de montage sont réduits lors d'un échange pour cause d'usure de l'élément racleur (3). Le positionnement en hauteur de l'élément racleur (3) sur la partie de fixation (4) est donné par le perçage (8). L'orientation de l'élément racleur (3) sur la partie de fixation (4) est donnée par le bossage (9).

D'après les figures 1 à 3, l'élément racleur (3) présente une forme cintrée. L'extrémité inférieure (6) est la partie horizontale de contact avec le sol qui est sensiblement parallèle au sol. L'extrémité inférieure (6) de l'élément racleur (3) est courbée par rapport à son extrémité supérieure (7). L'angle entre l'extrémité inférieure (6) et l'extrémité supérieure (7) est supérieur à 90°. Le bossage (9) est dirigé longitudinalement le long de l'extrémité supérieure (7) et sur une partie de sa longueur. Le perçage (8) s'étend en dessous dudit bossage (9). On remarque que la partie de fixation (4) présente un bout qui s'enroule en forme d'un anneau (10). L'anneau (10) est avantageusement ouvert. La partie de fixation (4) est réalisée par un brin d'acier à ressort rond. Le profil du brin d'acier pourrait aussi avoir un profil semi-circulaire ou polygonal. L'élément racleur (3) est fixé sur la partie de fixation (4) par le boulon (5) qui est un ensemble constitué d'une vis (11) et d'un écrou (12). Le serrage du boulon (5) assure l'assemblage. Dans une alternative, le boulon (5) peut être un système de fixation rapide avec une tige et une goupille ou un coin de serrage. D'une manière particulièrement avantageuse, la vis (11) présente une nervure (13). Cette nervure (13) réalise l'arrêt en rotation de la vis (11) lorsqu'elle est logée dans l'ouverture de l'anneau (10). La nervure (13) s'étend sous la tête de vis (11). Ainsi, un seul outil est nécessaire pour le montage et le serrage du boulon (5). Selon un exemple de réalisation non représenté, l'élément racleur (3) présente une forme droite. L'extrémité inférieure de l'élément racleur (3) est sensiblement parallèle à l'extrémité supérieure.

Dans une réalisation préférentielle, chaque organe égalisateur (2) présente une paire d'éléments racleurs (3) dont les pistes de travail se chevauchent. Chaque élément racleur (3) est destiné à être monté sur une partie de fixation (4) respective. Les parties de fixation (4) sont reliées entre elles de manière à ne former qu'un seul ensemble formé par deux brins. Les deux brins sont reliés par l'intermédiaire de leur enroulement à ressort et la partie centrale permet le montage de l'organe égalisateur (2) sur la machine agricole. Les éléments racleurs (3) sont arrangés de manière à ce que leurs extrémités inférieures (6) ne forment qu'une seule rangée. Le dispositif de nivellement (1) selon l'invention présente donc un faible encombrement en longueur.

Selon une autre importante caractéristique de l'invention, l'extrémité supérieure (7) de chaque élément racleur (3) présente deux bossages (9) et lorsque l'élément racleur (3) est monté sur la partie de fixation (4), cette dernière s'étend entre les deux bossages (9). Les bossages (9) présentent des directions parallèles. L'écartement entre les deux bossages (9) correspond à la section de la partie de fixation (4) correspondante.

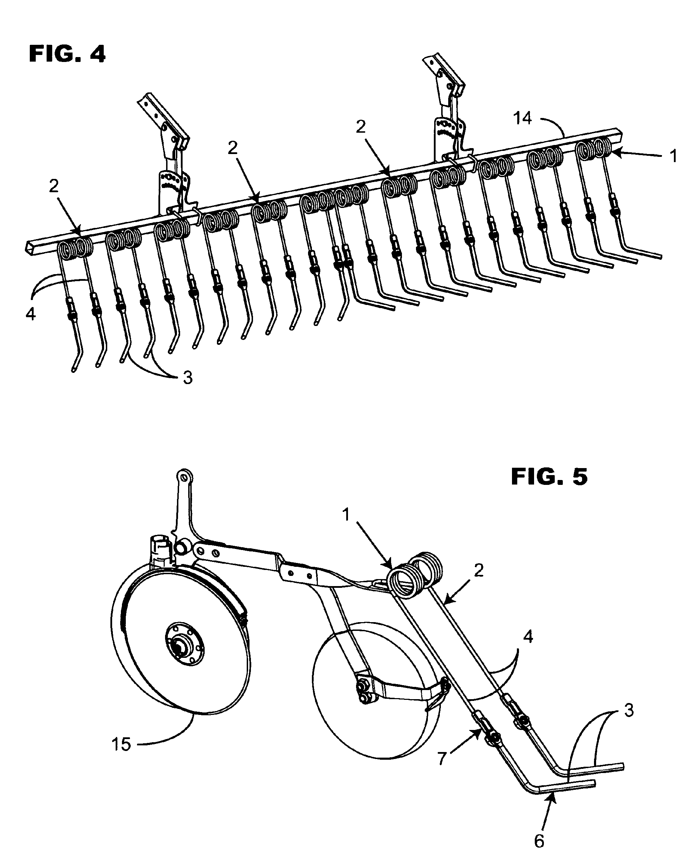

La figure 4 représente, en perspective, un dispositif de nivellement (1) selon un premier exemple de réalisation. Ce dispositif de nivellement (1) présente plusieurs organes égalisateurs (2) qui sont répartis et fixés sur une poutre (14). La poutre (14) s'étend sensiblement transversalement à la direction d'avance (A). Les organes égalisateurs (2) présentent un agencement symétrique par rapport au plan vertical médian de la poutre (14). Les organes égalisateurs (2) s'étendent sur une seule rangée et les pistes de travail des éléments racleurs (3) se recouvrent réciproquement. Les organes égaliseurs (2) présentent tous une longueur identique. Un tel dispositif de nivellement (1), aussi appelé herse de recouvrement, est monté à l'arrière d'une machine agricole de semis ou semoir. Le dispositif de nivellement (1) permet de recouvrir les graines placées dans les sillons et d'égaliser la couche superficielle. La poutre (14) est liée au châssis du semoir au moyen de bras articulés. La poutre (14) peut basculer autour d'un axe horizontal, s'étendant transversalement à la direction de déplacement, pour régler l'angle d'attaque des éléments racleurs (3) par rapport au sol. Le positionnement en hauteur du dispositif de nivellement (1) par rapport au sol est aussi réglable. La pression au sol des éléments racleurs (3) peut être adaptée en fonction du sol par la combinaison du réglage en hauteur et de celui de l'angle d'attaque. Avec ce dispositif de nivellement (1), le travail du sol est adapté au profil du terrain et est effectué de manière intégrale et uniforme sur toute la largeur du terrain.

La figure 5 montre un dispositif de nivellement (1) selon un autre exemple de réalisation. Il s'agit d'un dispositif de nivellement (1) directement monté à l'arrière d'un organe d'enterrage (15). L'organe d'enterrage (15) représenté est un soc à disques. Les organes d'enterrage (15) ouvrent des sillons de profondeur déterminés dans lesquels les graines sont placées puis recouvertes par le dispositif de nivellement (1) selon l'invention. Le dispositif de nivellement (1) permet d'effacer les sillons créés par les organes d'enterrage (15) et de ramener de la terre fine et des petites mottes sur la ligne de semis. Pour être efficace, le dispositif de nivellement (1) doit égaliser la terre sans perturber le placement des graines dans les sillons. Dans cette réalisation, chaque organe d'enterrage (15) est suivi d'un dispositif de nivellement (1). Le dispositif de nivellement (1) est monté sur l'organe d'enterrage (15). Ce dispositif de nivellement (1) présente deux parties de fixation (4). Chacune étant destinée à recevoir un élément racleur (3).

Il est bien évident que l'invention n'est pas limitée aux modes de réalisation décrits ci-dessus et représentés sur les dessins annexés. Des modifications restent possibles sans pour autant sortir du domaine de protection tel qu'il est défini par les revendications suivantes.

## Revendications

1. Dispositif de nivellement (1) pour machine agricole de travail du sol et/ou de semis avec au moins un organe égalisateur (2) présentant un élément racleur (3) et une partie de fixation (4) souple, l'élément racleur (3) étant monté sur ladite partie de fixation (4) par l'intermédiaire d'un boulon (5), ***caractérisé en ce que*** l'élément racleur (3) présente, au voisinage de son extrémité supérieure, un perçage (8) destiné à recevoir ledit boulon (5) et au moins un bossage (9) disposé au-dessus dudit perçage (8) et venant en regard de ladite partie de fixation (4).

2. Dispositif selon la revendication 1, ***caractérisé en ce que*** ledit au moins un bossage (9) est dirigé longitudinalement.

3. Dispositif selon la revendication 1 ou 2, ***caractérisé en ce que*** ledit au moins un bossage (9) s'étend sur au moins une partie de la longueur de l'extrémité supérieure (7) dudit élément racleur (3).

4. Dispositif selon l'une quelconque des revendications 1 à 3, ***caractérisé en ce que*** l'élément racleur (3) présente deux bossages (9) et que lorsque l'élément racleur (3) est monté sur ladite partie de fixation (4), ladite partie de fixation (4) s'étend entre lesdits deux bossages (9).

5. Dispositif selon l'une quelconque des revendications 1 à 4, ***caractérisé en ce que*** chaque organe égalisateur (2) présente une paire d'éléments racleurs (3) dont les pistes de travail se chevauchent, chaque élément racleur (3) étant monté sur une partie de fixation (4) respective.

6. Dispositif selon l'une quelconque des revendications 1 à 5, ***caractérisé en ce que*** la partie de fixation (4) est un brin en acier à ressort dont l'extrémité inférieure s'enroule en forme d'un anneau (10), ledit anneau (10) est ouvert.

7. Dispositif selon l'une quelconque des revendications 1 à 6, ***caractérisé en ce que*** ledit boulon (5) est constitué d'une vis (11) laquelle présente une nervure (13).

8. Machine agricole comportant au moins un dispositif (1) selon l'une quelconque des revendications 1 à 7.

## Patentansprüche

1. Nivelliervorrichtung (1) für Bodenbearbeitung- und/oder Sämaschine mit mindestens einem Egalisierelement (2) mit einem Schabelement (3) und einem flexiblem Befestigungsteil (4), wobei das Schabelement (3) mittels eines Bolzens (5) an dem Befestigungsteil (4) angebracht ist, ***dadurch gekennzeichnet,* dass** das Schabelement (3) in der Nähe seines oberen Ende eine Bohrung (8), die dazu bestimmt ist den Bolzen (5) aufzunehmen und mindestens einen Buckel (9), der sich über der Bohrung (8) und gegenüber dem Befestingungsteil (4) erstreckt, aufweist.

2. Vorrichtung nach Anspruch 1, ***dadurch gekennzeichnet,* dass** der mindestens eine Buckel (9) in Längsrichtung gerichtet ist.

3. Vorrichtung nach Anspruch 1 oder 2, ***dadurch gekennzeichnet,* dass** der mindestens eine Buckel (9) sich über mindestens einen Teil der Länge des oberen Ende (7) des Schabelements (3) erstreckt.

4. Vorrichtung nach irgend einem der Ansprüche 1 bis 3, ***dadurch gekennzeichnet,* dass** das Schabelement (3) zwei Buckel (9) aufweist und dass, wenn das Schabelement (3) an dem Befestigungsteil (4) angebracht ist, das Befestigungsteil (4) sich zwischen den beiden Buckel (9) erstreckt.

5. Vorrichtung nach irgend einem der Ansprüche 1 bis 4, ***dadurch gekennzeichnet,* dass** jedes Egalisierelement (2) ein Paar Schabelemente (3) aufweist, dessen Arbeitsspuren sich überlappen, wobei jedes Schabelement (3) an einem jeweiligen Befestigungsteil (4) angebracht ist.

6. Vorrichtung nach irgend einem der Ansprüche 1 bis 5, ***dadurch gekennzeichnet,* dass** das Befestigungsteil (4) ein Federstahlstrang ist, dessen unteren Ende sich in der Form eines Rings (10) einrollt, der Ring (10) ist ein offener Ring.

7. Vorrichtung nach irgend einem der Ansprüche 1 bis 6, ***dadurch gekennzeichnet,* dass** der Bolzen (5) aus einer Schraube (11) mit einer Rippe (13) gebildet ist.

8. Landwirtschaftliche Maschine mit mindestens einer Vorrichtung (1) nach irgend einem der Ansprüche 1 bis 7.

## Claims

1. Levelling device (1) for agricultural soil-working and/or seeding machine with at least one equalizing element (2) having a scraping element (3) and a flexible fastening portion (4), the scraping element (3) being mounted on the said fastening portion (4) by means of a bolt (5), ***characterized in* that** the scraping element (3) presents, in the vicinity of its upper end, a drilling (8) intended to house the said bolt (5) and at least one boss (9) arranged above the said drilling (8) and facing the said fastening portion (4).

2. Device according to Claim 1, ***characterized in* that** the at least one boss (9) is directed lengthwise.

3. Device according to Claim 1 or 2, ***characterized in* that** the at least one boss (9) extends over at least one part of the length of the upper end (7) of the said scraping element (3).

4. Device according to any one of Claims 1 to 3, ***characterized in* that** the scraping element (3) has two bosses (9) and ***in* that** when the scraping element (3) is mounted on the said fastening portion (4), the said fastening portion (4) extends between the said two bosses (9).

5. Device according to any one of Claims 1 to 4, ***characterized in* that** each equalizing element (2) has one pair of scraping elements (3), the work tracks of which overlap, each scraping element (3) being mounted on a respective fastening portion (4).

6. Device according to any one of Claims 1 to 5, ***characterized in* that** the fastening portion (4) is a spring-steel strand, the lower end of which winds up in a ring (10) shape, the said ring (10) is open.

7. Device according to any one of Claims 1 to 6, ***characterized in* that** the said bolt (5) is made of a screw (11) which has a rib (13).

8. Agricultural machine comprising at least one device (1) according to any one of Claims 1 to 7.
